(19) **Europäisches Patentamt / European Patent Office / Office européen des brevets**

(11) **EP 3 185 381 A1**

(12) **EUROPEAN PATENT APPLICATION**
published in accordance with Art. 153(4) EPC

(43) Date of publication:
**28.06.2017 Bulletin 2017/26**

(51) Int Cl.:
***H02G 15/24*** (2006.01)

(21) Application number: **15834018.2**

(22) Date of filing: **06.05.2015**

(86) International application number:
**PCT/KR2015/004490**

(87) International publication number:
**WO 2016/027962 (25.02.2016 Gazette 2016/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **19.08.2014 KR 20140107483**

(71) Applicant: **LS Cable & System Ltd.**
**Anyang-si, Gyeonggi-do 431-848 (KR)**

(72) Inventors:
• **CHAE, Byung-Ha**
  **Seoul 122-902 (KR)**
• **KANG, Chae-Hong**
  **Gumi-si**
  **Gyeongsangbuk-do 730-747 (KR)**
• **KIM, Sung-Yun**
  **Daegu 706-777 (KR)**
• **JUNG, Eui-Hwan**
  **Jincheon-gun**
  **Chungcheongbuk-do 365-805 (KR)**
• **YOON, Hyun-Sung**
  **Daegu 102-701 (KR)**

(74) Representative: **advotec.**
**Patent- und Rechtsanwälte**
**Widenmayerstrasse 4**
**80538 München (DE)**

(54) **JOINT BOX OF HIGH-VISCOSITY INSULATION OIL IMPREGNATED CABLE**

(57) The present invention relates to a joint box of a high-viscosity insulation oil impregnated cable, and more specifically, to a joint box of a high-viscosity insulation oil impregnated cable having an insulation layer comprising a composite insulation paper having craft paper laminated on the upper and lower surfaces of a polypropylene resin, and a part of the insulation layer comprising only the craft paper, the joint box having: a reinforcement insulation layer which covers an electrically connected conductor of the high-viscosity insulation oil impregnated cable, and comprises a high-viscosity insulation oil impregnated insulation paper; a housing which covers the connected conductor and the reinforcement insulation layer, and has high-viscosity insulation oil charged therein; and a buffer space which is provided on the inner side of the housing so that the internal pressure of the high-viscosity insulation oil when expanded may be withstood in the case where the high-viscosity insulation oil expands according to a temperature rise when the high-viscosity insulation oil impregnated cable operates.

Fig. 3

EP 3 185 381 A1

**Description**

TECHNICAL FIELD

The present invention relates to a joint box of a high-viscosity insulation oil impregnated cable, and more particularly, to a joint box which is configured to connect high-viscosity insulation oil impregnated cables to each other and which is capable of withstanding internal pressure applied due to expansion of high-viscosity insulation oil contained in the joint box according to an increase in temperature of the high-viscosity insulation oil as the cables are operated.

BACKGROUND ART

In general, a power cable is installed under the ground, on the ground, or at the bottom of a sea to supply power to a desired location using a conductor which supplies power. In the power cable, it is very important to insulate the conductor. To this end, an insulation layer for insulating the conductor is formed of cross-linked polyethylene (XLPE) or the like or is formed by rolling up insulation paper or the like.
A so-called 'paper insulation cable' including an insulation layer formed by rolling up the insulation paper may be classified as an oil-filled (OF) cable or a mass-impregnated (MI) cable according to the viscosity of insulation oil used.
The OF cable is limited in terms of length extension, since the insulation paper is impregnated with relatively low-viscosity insulation oil and the OF cable is operated by maintaining oil pressure constant by applying pressure to the insulation oil. In contrast, the MI cable may be extended to be long, since the insulation paper is impregnated with relatively high-viscosity insulation oil and a flow rate of the insulation oil within the insulation paper is thus low to remove a need to maintain oil pressure constant.
A joint box is coupled to the power cable at intervals of several hundreds of meters or several tens of kilometers, and a termination box is coupled to an end of the power cable. In order to couple a power cable to the joint box or the termination box, a conductor is first coupled to the joint box or the termination box in a state in which an insulation layer of the cable is exposed, and a surface of the insulation layer is wound with insulation paper impregnated with high-viscosity insulation oil to form a reinforcement insulation layer. Thereafter, an outer semiconducting layer and a metal sheath of the cable are restored and the inside of a housing forming the joint box is filled with high-viscosity insulation oil.
However, the volume of the high-viscosity insulation oil filled in the housing of the joint box may change according to a change in the temperature thereof. When the temperature increases, the volume of the high-viscosity insulation oil may increase and thus internal pressure may be applied to the inside of the housing. The internal pressure may cause the cable or the joint box to be broken.

DETAILED DESCRIPTION OF THE INVENTION

TECHNICAL PROBLEM

The present invention is directed to a joint box which is configured to connect high-viscosity insulation oil impregnated cables to each other and is capable of withstanding internal pressure applied due to expansion of high-viscosity insulation oil filled in the joint box according to an increase in a temperature of this oil as the cables are operated.

TECHNICAL SOLUTION

According to an aspect of the present invention, a joint box of a high-viscosity insulation oil impregnated cable including an insulation layer having composite insulation paper in which kraft paper is stacked on top and bottom surfaces of a propylene resin, wherein a portion of the insulation layer includes only kraft paper, the joint box comprising: a reinforcement insulation layer configured to cover an electrically connected conductor of the high-viscosity insulation oil impregnated cable, the reinforcement insulation layer including insulation paper impregnated with high-viscosity insulation oil; a housing configured to cover the connected conductor and the reinforcement insulation layer, the inside of the housing filled with the high-viscosity insulation oil; and a buffer space included in the housing to withstand internal pressure applied due to expansion of the high-viscosity insulation oil according to an increase in temperature of the high-viscosity insulation oil when the high-viscosity insulation oil impregnated cable is operated, wherein $V_{buffer}$ representing the buffer space satisfies the following equation: $V_{buffer} \geq \Delta V_1 + \Delta V_2$, wherein a first volume change $\Delta V_1$ represents a change in volume of the high-viscosity insulation oil according to a change in the temperature thereof, and a second volume change $\Delta V_2$ represents an inflow rate of the high-viscosity insulation oil flowing into the insulation layer and the reinforcement insulation layer of the high-viscosity insulation oil impregnated cable.
The first volume change $\Delta V_1$ is defined by the following equation: $\Delta V_1 = \alpha \times \Delta T \times V_{oil}$, wherein $\alpha$ represents a coefficient of thermal expansion of the high-viscosity insulation oil, $\Delta T$ represents a maximum temperature change of the high-viscosity insulation oil, and $V_{oil}$ represents an amount of the high-viscosity insulation oil filled in the housing.

The maximum temperature change ΔT of the high-viscosity insulation oil may be determined to be a larger value of the difference between temperature of the high-viscosity insulation oil when the high-viscosity insulation oil is filled in the housing and temperature of the high-viscosity insulation oil while the high-viscosity insulation oil impregnated cable is not operated and the difference between the temperature of the high-viscosity insulation oil while the high-viscosity insulation oil impregnated cable is not operated and temperature of the high-viscosity insulation oil while the high-viscosity insulation oil impregnated cable is operated.

The second volume change $\Delta V_2$ is defined by the following equation: $\Delta V_2 = \beta \times (V_{housing} - V_{oil} - V_{conductor}) \times \gamma$, wherein β represents a volume ratio of the insulation paper included in the insulation layer of the high-viscosity insulation oil impregnated cable, $V_{housing}$ represents an internal volume of the housing, $V_{oil}$ represents the amount of the high-viscosity insulation oil filled in the housing, $V_{conductor}$ represents a volume of the conductor of the high-viscosity insulation oil impregnated cable inserted into the housing, and γ represents an absorption rate of the insulation oil into the insulation paper.

The joint box further comprises at least one pair of through-holes provided on the top and bottom of the housing to be spaced apart from each other in a lengthwise direction of the housing.

The high-viscosity insulation oil is suppled via the through-hole provided on the bottom of the housing, and discharged via the through-hole provided on the top of the housing to be spaced apart from the through-hole on the bottom the housing in the lengthwise direction.

ADVANTAGEOUS EFFECTS

According to the present invention described above, in a joint box configured to connect high-viscosity insulation oil impregnated cables to each other, a buffer space is provided to withstand internal pressure applied to the inside of the joint box due to expansion of the volume of high-viscosity insulation oil according to a change in a temperature thereof as the cables are operated, thereby preventing the cable and/or the joint box from being broken.

DESCRIPTION OF THE DRAWINGS

FIG. 1 is a partially cut-away perspective view of a paper insulation cable according to an embodiment.
FIG. 2 is a partially cut-away perspective view of a paper insulation cable according to another embodiment.
FIG. 3 is a cross-sectional view illustrating an inner structure of a joint box for connecting high-viscosity insulation oil impregnated cables to each other.

MODE OF THE INVENTION

Hereinafter, exemplary embodiments of the present invention will be described in detail with reference to the accompanying drawings. However, the present invention is not limited to the embodiments set forth herein and may be embodied in many different forms. Rather, these embodiments are provided so that this disclosure will be thorough and complete and will fully convey the concept of the invention to those of ordinary skill in the art. The same reference numerals represent the same elements throughout the present disclosure.

In general, a joint box is coupled to a high-viscosity insulation oil impregnated cable (hereinafter referred to as a 'MI cable') at intervals of several hundreds of meters or several tens of kilometers, and an end of the MI cable is coupled to an overhead line via a termination box. First, the structure of the MI power cable will be described and then a joint box will be described below.

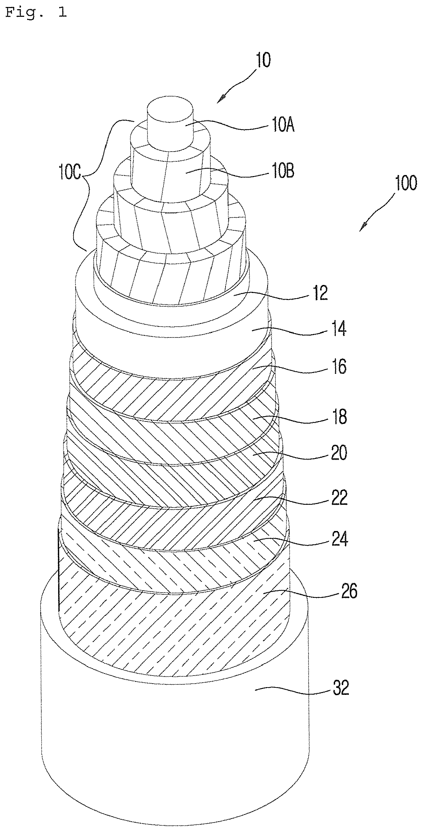

FIG. 1 is a partially cut-away perspective view illustrating an inner structure of a MI cable 100 according to an embodiment.

Referring to FIG. 1, the MI cable 100 includes a conductor 10 at a center thereof. The conductor 10 acts as a path through which current flows. As illustrated in the drawings, the conductor 10 may include a flat element wire layer 10C including a central element wire 10A having a round shape and flat element wires 10B twisted together to cover the central element wire 10A. The flat element wire layer 10C is manufactured by forming the flat element wires 10B tohave tetragonal cross-sections according to a continuous extrusion process and twisting the flat element wires 10B together on the central element wire 10A. The conductor 10 is formed in a round shape. Although not shown, the conductor 10 may be formed by twisting a plurality of round element wires together. However, a conductor formed of flat element wires has a higher space factor than that of a conductor formed of round element wires and may be thus appropriate for a high-voltage power cable.

However, since the conductor 10 has a non-smooth surface, an electric field may be not uniform or be concentrated, and a corona discharge is likely to occur locally. Furthermore, when a void occurs between a surface of the conductor 10 and an insulation layer 14 which will be described below, the insulation performance of the cable 100 maybe degraded. To solve this problem, an outer surface of the conductor 10 may be covered with a semiconducting material such as semiconducting carbon paper. A layer formed of the semiconducting material will be defined herein as an inner semiconducting layer 12.

Thus, the inner semiconducting layer 12 mitigates an electric field on a surface of the conductor 10, and prevents a partial discharge from occurring due to a void between the conductor 10 and the insulation layer 14. The inner semiconducting layer 12 may also make the cable 100 have a form of an ideally concentrically cylindrical electrode to planarize the surface of the conductor 10, thereby mitigating the concentration of an electric field, and make the conductor 10 and the insulation layer 14 to be in close contact with each other, thereby preventing a corona discharge from occurring on a surface of the conductor 10. Furthermore, impurities maybe adsorbed by preventing electrons from being inj ectedor flowing between the conductor 10 and the inner semiconducting layer 12 and between the inner semiconducting layer 12 and the insulation layer 14.

The insulation layer 14 is provided on an outer side of the inner semiconducting layer 12. The insulation layer 14 electrically insulates the conductor 10 from the outside. Ingeneral, a high breakdown voltage of the insulation layer 14 should be high and the insulation performance thereof should be stably maintained for a long time. Furthermore, the insulation layer 14 should have a low dielectric loss and thermal-resistance performance such as a heat-resisting property. In the present embodiment, the insulation layer 14 is formed according to a paper insulation process of winding insulation paper around a surface of the inner semiconducting layer 12. Furthermore, in order to improve an insulating property of the cable 100, the conductor 10 is impregnated with insulation oil in a state in which the surface of the conductor 10 is wound with the insulation paper. The insulation oil is absorbed into the insulation paper through this impregnation process. The cable 100 may be defined as a 'mass impregnated (MI) cable' when high-viscosity insulation oil is used as in the present embodiment, and may be defined as an 'oil filled (OF) cable' when a relatively low-viscosity insulation oil is used. Hereinafter, in the present embodiment, the MI cable manufactured by impregnating insulation paper with relatively high-viscosity insulation oil or an insulation compound will be described.

In the present embodiment, the insulation layer 14 is formed by rolling up a plurality of pieces of insulation paper. For example, the insulation layer 14 may include at least kraft paper, and may further include a thermoplastic resin such as a polypropylene resin. In detail, the insulation layer 14 may be formed by rolling up composite insulation paper, for example, insulation paper having a structure in which kraft paper is stacked at the top and bottom of a polypropylene resin.

In the case of an insulation oil impregnated MI cable formed by rolling up only kraft paper, a temperature difference occurs inside a radial direction, i.e., outside a radial direction of a portion of an insulation layer in a direction of an inner semiconducting layer, i.e., a portion of the insulation layer in a direction of an outer semiconducting layer to be described below, due to current flowing through a conductor of the MI cable when the MI cable is operated (when current is conducted). Thus, insulation oil of the portion of the insulation layer (which is at a higher temperature) in the direction of the inner semiconducting layer decreases in viscosity and thermally expands, and thus moves to the outside of the radial direction. When the temperature deceases, the insulation oil moving due to the thermal expansion increases in viscosity and thus does not return to the original state thereof. Thus, bubbles occur inside the radial direction, i.e., at the portion of the insulation layer in the direction of the inner semiconducting layer, thereby degrading the insulation performance of the MI cable.

However, when an insulation layer is formed of composite insulation paper as described above, thermoplastic resin, such as polypropylene resin, which is not impregnated with the insulation oil may thermally expand and thus suppress the flow of the insulation oil during operation of the cable 100. A relatively high electric field may be assigned to the polypropylene resin having higher resistivity and higher dielectric strength than those of kraft paper according to resistive electric-field distribution characteristics of a direct-current (DC) cable in which an electric field is distributed according to resistivity. An electric field to be assigned to bubbles occurring as the insulationoil shrinks or expands according to a temperature change when the cable is operated/short-circuited may be mitigated.

Furthermore, since polypropylene resin is not impregnated with the insulation oil, the insulation oil may be suppressed from flowing in a direction of the diameter of the cable due to the force of gravity. In addition, the flow of the insulation oil may be more suppressed, since polypropylene resin thermally expands according to impregnation temperature during the manufacture of the cable or working temperature of the cable during operation of the cable and thus applies surface pressure to the kraft paper.

Furthermore, when the insulting layer 14 is formed of the composite insulation paper, a portion of the insulation layer 14 may be formed by rolling up only kraft paper to control an electric field.

However, when the outside of the insulation layer 14 as well as the inside thereof is not shielded, a portion of an electric field is absorbed into the insulation layer 14 but the remaining electric field is discharged to the outside. In this case, when the electric field increases to a predetermined level or more, the insulation layer 14 and an outer cover of the cable 100 may be broken by the electric field. Thus, a semiconducting layer is provided at an outer side of the insulation layer 14. This semiconductor layer will be referred herein to as an outer semiconducting layer 16 so that it may be distinguished from the inner semiconducting layer 12 described above. The outer semiconducting layer 16 protects the insulation layer 14 by suppressing a non-uniform electric field caused by insulation thickness variation, and improves the dielectric strength of the insulation layer 14 by causing an electric force line distribution between the outer semiconducting layer 16 and the inner semiconducting layer 12 to have an equipotential level. Furthermore, the outer semiconducting layer 16 may planarize a surface of the insulation layer 14 to mitigate the concentration of an electric field in the cable 100, thereby preventing a corona discharge from occurring.

A woven copper wire tape 18 is provided at an outer side of the outer semiconducting layer 16. The insulation performance of the insulation oil impregnated in the insulation layer 14 or an insulation compound are degraded when a foreign substance such as water penetrates the cable 100. Thus, a metal sheath 20 formed of lead, i.e., a so-called lead sheath, is provided at an outer side of the woven copper wire tape 18 to prevent this problem from occurring.

A bedding layer 22 is provided at an outer side of the metal sheath 20 to prevent the metal sheath 20 from being in direct contact with water. A non-woven fabric tape 24 and a proofed tape 26 are formed on the bedding layer 22 to cover the bedding layer 22. A jacket 32 is provided as an exterior of the cable 100 at an outer side of the cable 100. The jacket 32 is provided at the outer side of the cable 100 to protect the inner elements of the cable 100. The jacket 32 may be formed of, for example, polyethylene (PE) to have weather resistance to various environmental conditions and high mechanical strength.

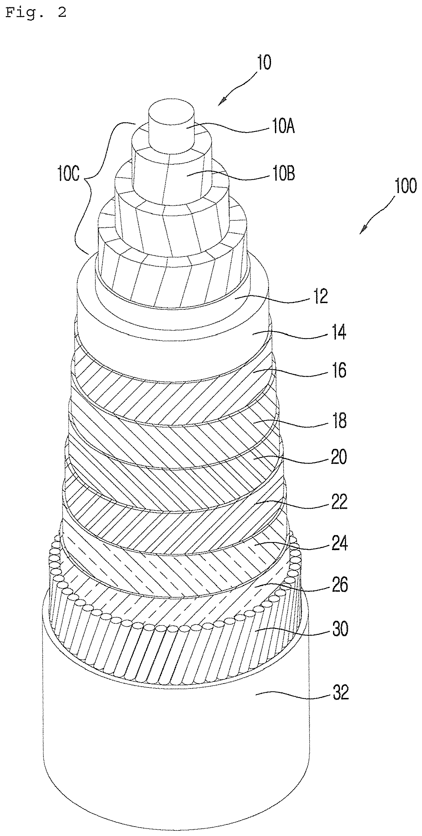

FIG. 2 is a partially cut-away perspective view of a MI cable 100 according to another embodiment. The MI cable 100 of FIG. 2 is, for example, a power cable available as a so-called submarine cable connecting areas on the ground through the sea. The embodiment of FIG. 2 will be described focusing on the differences from the embodiment of FIG. 1 described above.

Referring to FIG. 2, the MI cable 100 available as a submarine cable includes a sheathing wire 30 at an outer side of the cable 100 to increase mechanical strength so that the cable 100 may be protected from an external environment of the bottom of the sea. In detail, the sheathing wire 30 may be provided at an outer side of a proofed tape 26, or the outer side of the proofed tape 26 may be wound with non-woven fabric tape (not shown) and the sheathing wire 30 may be provided to surround the non-woven fabric tape, compared to the embodiment of FIG. 1 described above.

A jacket 32 serving as an exterior of the MI cable 100 is provided on an outer side of the sheathing wire 30, i.e., the outer side of the MI cable 100. The jacket 32 is provided on the outer side of the MI cable 100 to protect the inner elements of the MI cable 100. In particular, in the case of a submarine cable, the jacket 32 has weather resistance to an underwater environment such as seawater, and high mechanical strength. For example, the jacket 32 may be formed of polypropylene yarn or the like.

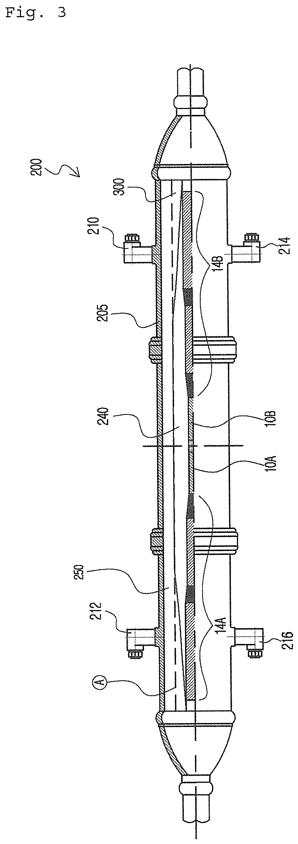

FIG. 3 is a cross-sectional view illustrating an inner structure of a joint box 200 for connecting MI cables to each other as described above to each other.

Referring to FIG. 3, the joint box 200 includes a reinforcement insulation layer 240 to cover at least portions of conductors 10A and 10B connected to each other and exposed insulation layers 14A and 14B when layers (e.g. , an outer semiconducting layer, a metal sheath, and a jacket) of the MI cables which are provided at outer sides of the insulation layers 14A and 14B are removed to expose at least portions of the insulation layers 14A and 14B and at least portions of the exposed insulation layers 14A and 14B are removed to electrically connect the exposed conductors 10A and 10B to each other; and a housing 205 provided to cover the connected conductors 10A and 10B and the reinforcement insulation layer 240, the inside of the housing 205 filled with high-viscosity insulation oil 300.

A pair of MI cables are inserted into opposite sides of the housing 205 to be electrically connected to each other. For example, in the housing 205, insulation paper included in the insulation layers 14A and 14B of the MI cables are sequentially removed to expose the conductors 10A and 10B, and the conductors 10A and 10B are electrically connected to each other. Next, the reinforcement insulation layer 240 is formed to cover the conductors 10A and 10B connected to each other. The reinforcement insulation layer 240 is formed by winding the insulation paper impregnated with the high-viscosity insulation oil 300 around the insulation layers 14A and 14B, as well as the connected portions of the conductors 10A and 10B. In this case, the insulation paper may be wound in a state in which it has already been impregnated with the high-viscosity insulation oil 300 or the insulation paper impregnated with the high-viscosity insulation oil 300 may be drawn and wound.

Next, an outer semiconducting layer 16 and a metal sheath 20 are restored on the reinforcement insulation layer 240, and the inside of the housing 205 is filled with the high-viscosity insulation oil 300.

At least one pair of through-holes, e.g., through-holes 210, 212, 214, and 216, may be provided at the top and bottom of the housing 205 to be spaced apart from each other in a lengthwise direction of the housing 205. When the through-holes 210, 212, 214, and 216 are provided at the top and bottom of the housing 205 as described above, insulation oil maybe supplied via the through-holes 214 and 216 at the bottom of the housing 205, and discharged via the through-holes 212 and 210 at the top of the housing 205, so that the reinforcement insulation layer 240 inside the housing 205 may be more exactly impregnated with the high-viscosity insulation oil 300. Furthermore, these through-holes are provided in the lengthwise direction of the housing 205 to be spaced apart from eachother in opposite directions.

Thus, the insulationoil supplied via the through-holes 214 and 216 at the bottom of the housing 205 impregnates the reinforcement insulation layer 240 and is then discharged via the through-holes 212 and 210 at the top of the housing 205 which are opposite to the through-holes 214 and 216 in the lengthwise direction of the housing 205, thereby more smoothly impregnating the reinforcement insulation layer 240 with the insulation oil.

As described above, the volume of the high-viscosity insulation oil 300 filled inside the housing 205 of the joint box 200 changes according to a unique thermal expansion coefficient of the high-viscosity insulation oil 300 when the temperature of the high-viscosity insulation oil 300 increases as the cable is operated. In this case, when the temperature of the cable increases, the volume of the high-viscosity insulation oil 300 may increase and internal pressure may be thus applied to the inside of the housing 205 due to the increase in the volume of the high-viscosity insulation oil 300. The internal pressure may cause the cable or the joint box 200 to be broken. The joint box 200 including a buffer space 250 inside the housing 205 to withstand the internal pressure will be described below.

In the housing 205, a change in the volume of the high-viscosity insulation oil 300 may be largely divided into a change in the volume of the high-viscosity insulation oil 300 according to a change in the temperature thereof and a change in the volume of the high-viscosity insulation oil 300 when the high-viscosity insulation oil 300 flows into the reinforcement insulation layer 240 included in the housing 205. Thus, the buffer space 250 $V_{buffer}$ may be determined by taking into account a change in the volume of the high-viscosity insulation oil 300 according to a change in the temperature thereof and a change in the volume of the high-viscosity insulation oil 300 when the high-viscosity insulation oil 300 flows into the reinforcement insulation layer 240 in the housing 205.

For example, the buffer space 250 $V_{buffer}$ may be defined to satisfy Equation 1 below.

【Equation 1】

$$V_{buffer} \geq \triangle V_1 + \triangle V_2$$

In Equation 1 above, a first volume change $\Delta V_1$ may represent a change in the volume of the high-viscosity insulation oil 300 according to a change in the temperature thereof, and a second volume change $\Delta V_2$ may represent an inflow rate of the high-viscosity insulation oil flowing into the insulation layers 14A and 14B and the reinforcement insulation layer 240 of the cable.

That is, a lower limit of the buffer space 250 may be determined to be the sum of the volume change $\Delta V_1$ of the high-viscosity insulation oil 300 according to the change in the temperature thereof and the inflow rate $\Delta V_2$ of the high-viscosity insulation oil 300 filled in the housing 205 and flowing into the insulation layers 14A and 14B and the reinforcement insulation layer 240 of the cable.

Here, the first volume change $\Delta V_1$ according to the temperature change may be defined to satisfy Equation 2 below.

【Equation 2】

$$\triangle V_1 = \alpha \times \triangle T \times V_{oil}$$

Here, $\alpha$ may represent a coefficient of thermal expansion of the high-viscosity insulation oil, $\Delta T$ may represent a maximum temperature change of the high-viscosity insulation oil 300, and $V_{oil}$ may represent the amount of the high-viscosity insulation oil 300 filled in the housing 205. That is, the first volume change $\Delta V_1$ may represent a change in the volume of the high-viscosity insulation oil 300 according to a change in the temperature thereof in a state in which the inside of the housing 205 is fully filled with the high-viscosity insulation oil 300.

In Equation 2 above, the maximum temperature change $\Delta T$ of the high-viscosity insulation oil 300 may be determined to be a larger value of the difference between the temperature of the high-viscosity insulation oil 300 when the high-viscosity insulation oil 300 is filled in the housing 205 and the temperature of the high-viscosity insulation oil 300 while the cable is not operated and the difference between the temperature of the high-viscosity insulation oil 300 while the cable is not operated and the temperature of the high-viscosity insulation oil 300 while the cable is operated.

In order to easily fill the inside of the housing 205 with the high-viscosity insulation oil 300, the high-viscosity insulation oil 300 is heated to a predetermined temperature, e.g., about 70 to 80 °C. The temperature of the joint box 200 decreases to about room temperature when the cable is not operated. Thus, the temperature of the high-viscosity insulation oil 300 in the housing 205 changes by a first temperature change corresponding to the difference between the temperature of the high-viscosity insulation oil 300 when the high-viscosity insulation oil 300 is filled in the housing 205 and the temperature of the high-viscosity insulation oil 300 while the cable is not operated.

When the cable is operated, the temperature of the high-viscosity insulation oil 300 is increased by heat generated in the cable. In this case, a second temperature change occurs, compared to when the cable is not operated.

Thus, during calculation of the first volume change $\Delta V_1$, the maximum temperature change $\Delta T$ is determined to be a larger value of the first temperature change and the second temperature change. Thus, even when the first or second temperature change which is a larger value occurs, internal pressure applied due to a change in the volume of the high-viscosity insulation oil 300 may be withstood well.

The second volume change $\Delta V_2$ corresponding to the inflow rate of the high-viscosity insulation oil 300 flowing into the insulation layers 14A and 14B and the reinforcement insulation layer 240 of the cable may be defined by Equation 3 below.

【Equation 3】

$$\triangle V_2 = \beta \times ( V_{housing} - V_{oil} - V_{conductor} ) \times \gamma$$

Here, $\beta$ may represent a volume ratio of the insulation paper included in the insulation layers 14A and 14B of the cable, $V_{housing}$ may represent internal volume of the housing 205, $V_{oil}$ may represent the amount of the high-viscosity insulation oil 300 filled in the housing 205, $V_{conductor}$ may represent the volume of the conductor of the cable inserted into the housing 205, and $\gamma$ may represent an absorption rate of insulation oil into the insulation paper.

The inflow rate of the insulation oil flowing into the insulation layers 14A and 14B and the reinforcement insulation layer 240 may be determined by calculating the volumes of the insulation layers 14A and 14B and the reinforcement insulation layer 240 and multiplying the volumes by the volume rate of the insulation paper and the absorption rate of the insulation oil into the insulation paper.

Thus, the volumes of the insulation layers 14A and 14B and the reinforcement insulation layer 240 included in the housing 205 may be calculated by excluding the amount $V_{oil}$ of the high-viscosity insulation oil filled in the housing 205 and the volumes $V_{conductor}$ of the conductors 10A and 10B of the cable from the internal volume $V_{housing}$ of the housing 205. The inflow rate of the high-viscosity insulation oil flowing into the insulation layers 14A and 14B and the reinforcement insulation layer 240 may be calculated by multiplying the volumes of the insulation layers 14A and 14B and the reinforcement insulation layer 240 by the volume ratio $\beta$ of the insulation paper included in the insulation layers 14A and 14B and the reinforcement insulation layer 240 and the absorption rate $\gamma$ of the insulation oil into the insulation paper.

As described above, the insulation paper included in the insulation layers 14A and 14B of the cable includes at least kraft paper. In this case, the absorption rate $\gamma$ of the insulation oil into the insulation paper may be about 0.01.

An upper limit of the buffer space 250 $V_{buffer}$ may be defined to satisfy Equation 4 below.

【Equation 4】

$$V_{buffer} \leq V_{max}$$

Here, the maximum volume $V_{max}$ represents a volume of a part of the inside of the housing 205 which is not submerged by the high-viscosity insulation oil when a level of the high-viscosity insulation oil filled in the housing 205 corresponds to a height of the reinforcement insulation layer 240.

Although the buffer space 250 has a value which is greater than or equal to the sum of the first volume change $\Delta V_1$ and the second volume change $\Delta V_2$ as described above, the buffer space 250 has a value which is greater than or equal to the level of the high-viscosity insulation oil and is equal to or less than the internal volume of the the housing 205 when the level (a level 'A' in FIG. 3) of the high-viscosity insulation oil filled in the housing 205 corresponds to the height of the reinforcement insulation layer 240. That is, when the level of the high-viscosity insulation oil 300 filled in the housing 205 corresponds to the height of the reinforcement insulation layer 240, the volume of the portion of the inside of the housing 205 which is not submerged by the high-viscosity insulation oil 300 may be determined as the upper limit of the buffer space $V_{buffer}$ 250.

In FIG. 3, the level of the high-viscosity insulation oil 300 corresponding to the height of the reinforcement insulation layer 240 is indicated by reference numeral 'A'. Thus, when the level of the high-viscosity insulation oil 300 corresponds to the level A, the buffer space 250 may be defined as an internal volume of the housing 205 at the level A or more.

The upper limit is determined such that the insulating performance of the joint box 200 is maintained constant right after the cable is operated while at least the reinforcement insulation layer 240 in the housing 205 is submerged by the high-viscosity insulation oil 300, i.e., before the insulation oil expands due to a change in the temperature thereof.

INDUSTRIAL APPLICABILITY

According to the present invention described above, in a joint box for connecting high-viscosity insulation oil impregnated cables to each other, a buffer space is provided to withstand internal pressure applied to the inside of the joint box due to expansion of the volume of the high-viscosity insulation oil according to an increase in the temperature thereof when the cables are operated, thereby preventing the cables and/or the j oint box from being broken.

**Claims**

1. A joint box of a high-viscosity insulation oil impregnated cable including an insulation layer having composite insulation paper in which kraft paper is stacked on top and bottom surfaces of a propylene resin, wherein a portion of the insulation layer includes only kraft paper, the joint box comprising:

a reinforcement insulation layer configured to cover an electrically connected conductor of the high-viscosity insulation oil impregnated cable, the reinforcement insulation layer including insulation paper impregnated with high-viscosity insulation oil;
a housing configured to cover the connected conductor and the reinforcement insulation layer, the inside of the housing filled with the high-viscosity insulation oil; and
a buffer space included in the housing to withstand internal pressure applied due to expansion of the high-viscosity insulation oil according to an increase in temperature of the high-viscosity insulation oil when the high-viscosity insulation oil impregnated cable is operated,
wherein $V_{buffer}$ representing the buffer space satisfies the following equation:

$$V_{buffer} \geq \triangle V_1 + \triangle V_2,$$

wherein a first volume change $\triangle V_1$ represents a change in volume of the high-viscosity insulation oil according to a change in the temperature thereof, and
a second volume change $\triangle V_2$ represents an inflow rate of the high-viscosity insulation oil flowing into the insulation layer and the reinforcement insulation layer of the high-viscosity insulation oil impregnated cable.

2. The joint box of claim 1, wherein the first volume change $\triangle V_1$ is defined by the following equation:

$$\triangle V_1 = \alpha \times \triangle T \times V_{oil},$$

wherein $\alpha$ represents a coefficient of thermal expansion of the high-viscosity insulation oil, $\triangle T$ represents a maximum temperature change of the high-viscosity insulation oil, and $V_{oil}$ represents an amount of the high-viscosity insulation oil filled in the housing.

3. The joint box of claim 2, wherein the maximum temperature change $\triangle T$ of the high-viscosity insulation oil is determined to be a larger value of the difference between temperature of the high-viscosity insulation oil when the high-viscosity insulation oil is filled in the housing and temperature of the high-viscosity insulation oil while the high-viscosity insulation oil impregnated cable is not operated and the difference between the temperature of the high-viscosity insulation oil while the high-viscosity insulation oil impregnated cable is not operated and temperature of the high-viscosity insulation oil while the high-viscosity insulation oil impregnated cable is operated.

4. The joint box of any one of claims 1 to 3, wherein the second volume change $\Delta V_2$ is defined by the following equation:

$$\triangle V_2 = \beta \times ( V_{housing} - V_{oil} - V_{conductor} ) \times \gamma \,,$$

wherein $\beta$ represents a volume ratio of the insulation paper included in the insulation layer of the high-viscosity insulation oil impregnated cable, $V_{housing}$ represents an internal volume of the housing, $V_{oil}$ represents the amount of the high-viscosity insulation oil filled in the housing, $V_{conductor}$ represents a volume of the conductor of the high-viscosity insulation oil impregnated cable inserted into the housing, and $\gamma$ represents an absorption rate of the insulation oil into the insulation paper.

5. The joint box of claim 1, further comprising at least one pair of through-holes provided on the top and bottom of the housing to be spaced apart from each other in a lengthwise direction of the housing.

6. The joint box of claim 5, wherein the high-viscosity insulation oil is suppled via the through-hole provided on the bottom of the housing, and discharged via the through-hole provided on the top of the housing to be spaced apart from the through-hole on the bottom the housing in the lengthwise direction.

Fig. 1

Fig. 2

Fig. 3

# EP 3 185 381 A1

<table>
<tr><td colspan="2"><strong>INTERNATIONAL SEARCH REPORT</strong></td><td>International application No.<br><strong>PCT/KR2015/004490</strong></td></tr>
</table>

**A. CLASSIFICATION OF SUBJECT MATTER**

*H02G 15/24(2006.01)i*

According to International Patent Classification (IPC) or to both national classification and IPC

**B. FIELDS SEARCHED**

Minimum documentation searched (classification system followed by classification symbols)
H02G 15/24; H02G 15/34; H02G 15/20; H01B 7/14; H01B 7/02; H02G 15/064; H01B 12/02; H01B 12/16; H02G 1/14

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: cable, joint box, insulating oil, expansion, buffer zone, inflow rate

**C. DOCUMENTS CONSIDERED TO BE RELEVANT**

| Category* | Citation of document, with indication, where appropriate, of the relevant passages | Relevant to claim No. |
|---|---|---|
| A | JP 08-065875 A (KANSAI ELECTRIC POWER CO. INC. et al.) 08 March 1996<br>See paragraphs [0007]-[0008] and figure 1. | 1-6 |
| A | KR 10-2010-0046225 A (SUMITOMO ELECTRIC INDUSTRIES, LTD.) 06 May 2010<br>See paragraphs [0049]-[0051] and figure 2. | 1-6 |
| A | JP 2009-171744 A (SUMITOMO ELECTRIC IND. LTD. et al.) 30 July 2009<br>See abstract, claims 1-3 and figures 1-4. | 1-6 |
| A | JP 2007-028710 A (SUMITOMO ELECTRIC IND. LTD.) 01 February 2007<br>See abstract, claims 1-3 and figures 1-5. | 1-6 |
| A | JP 2005-006379 A (J-POWER SYSTEMS CORP.) 06 January 2005<br>See abstract, claims 1-3 and figures 1-4. | 1-6 |

☐ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 25 AUGUST 2015 (25.08.2015) | **26 AUGUST 2015 (26.08.2015)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/004490**

| Patent document cited in search report | Publication date | Patent family member | Publication date |
|---|---|---|---|
| JP 08-065875 A | 08/03/1996 | NONE | |
| KR 10-2010-0046225 A | 06/05/2010 | EP 2192600 A1 | 02/06/2010 |
| | | JP 2009-076441 A | 09/04/2009 |
| | | JP 5369507 B2 | 18/12/2013 |
| | | US 2010-0206616 A1 | 19/08/2010 |
| | | US 8242357 B2 | 14/08/2012 |
| | | WO 2009-028303 A1 | 05/03/2009 |
| JP 2009-171744 A | 30/07/2009 | JP 5108539 B2 | 26/12/2012 |
| JP 2007-028710 A | 01/02/2007 | WO 2007-007515 A1 | 18/01/2007 |
| JP 2005-006379 A | 06/01/2005 | JP 4260553 B2 | 30/04/2009 |

Form PCT/ISA/210 (patent family annex) (July 2009)